# EUROPEAN PATENT SPECIFICATION

(11) **EP 3 650 600 B1**
(45) Date of publication and mention of the grant of the patent: **26.08.2026**
(21) Application number: 18827931.9
(22) Date of filing: 06.07.2018
(51) Int. Cl.: D21B 1/08, D21B 1/10, C04B 16/02, C04B 18/24

(54) **MANUFACTURING METHOD FOR CELLULOSE FLAKES AND RELATED BINDING COMPOUND INCORPORATING SAME**
VERFAHREN ZUR HERSTELLUNG VON ZELLULOSEFLOCKEN UND DIESE ENTHALTENDE BINDEMITTELZUSAMMENSETZUNG
PROCÉDÉ DE FABRICATION DES FLOCONS DE CELLULOSE ET COMPOSITION AGGLUTINANTE LES COMPRENANT

(30) Priority: 07.07.2017 BR 102017014789
(43) Date of publication of application: 13.05.2020
(73) Proprietor: Vieira, Rafael Musiello, 22783-110 Rio De Janeiro (BR)
(72) Inventor: Vieira, Rafael Musiello, 22783-110 Rio De Janeiro (BR)
(74) Representative: Dragotti & Associati S.P.A.
(86) International application number: PCT/BR2018/050226
(87) International publication number: WO 2019/006531

(56) References cited:
- BR-A2- 102013 021 313
- BR-A2- 102013 021 313
- BR-A2- PI0 605 985
- BR-A2- PI0 605 985
- BR-A2- PI1 104 067
- BR-A2- PI1 104 067
- KR-A- 20020 015 154
- KR-A- 20020 015 154
- US-A- 4 123 489
- US-A- 4 123 489
- US-A- 4 123 489
- US-A- 5 350 451
- US-A- 5 350 451

## Description

### Technical Field

The present invention relates to a manufacturing method of cellulose flakes obtained from Kraft paper packing used in construction and to a binding compound comprising such flakes. The present invention relates to the field of construction.

### Background

Concern for the environment is gaining momentum on the agenda of countries, which create laws to regulate the waste generation and disposal. All this work is due to the awareness that it is necessary to reduce waste generation through reuse and recycling of materials.

The document US 4123489 a method for converting waste paper materials into more useful forms.

Construction is one of the sectors that generate the most waste, and hence the need to introduce reuse practices to minimize the current situation. Among the main wastes generated by construction are cement and lime packaging, in addition to Kraft paper bags, which are present in all types of work and in large volume (Santos and Carvalho, 2011) [1].

An efficient method for reusing Kraft paper bags is a solution that has long been sought, as can be seen from the numerous patent documents from research in the area, as mentioned below.

Document PI 0605985-6 addresses the problem of lack of recycling of cement bags from construction and refers to a method for manufacturing a composite obtained by reusing and/or recycling sacks of cement and mortar. This method is characterized by using recycling blades of Kraft paper pieces and Portland cement cream with commercial glue and might be used to produce flat or curved, industrial or handcraft plates. The method under consideration consists of crushing the discarded bags with the addition of water, followed by drainage of excess water, molding, and suction of the obtained plate, subsequent pressing, and drying of the plates.

Document WO 2016/077901 addresses the problem of lack of recycling of paper bags and refers to a method of reusing this type of material. This invention relates to the reuse of Kraft paper bags or the like, notably used as disposable packaging of different products, such as binders in general, mainly cement, lime, mortar, and plaster. This document aims to recycle the constituent paper of the bag for the manufacture of new materials and the recycling method involves a water addition step.

Document US 5,350,451 proposes to solve the problem of paper waste accumulation and claims a building material made from the use of recycled paper and the method for manufacturing it. According to the specification, a pulp made of paper fibers, water, and cement might be used for a variety of construction applications. After draining most of the water, the sludge obtained may be molded into blocks, sheets, or any other shape desired for use as a building material or might be sprayed into wire forms to form other structures. The slurry product might be used in conjunction with building blocks that are made from the slurry. Such sludge can also be used as a plaster when mixed with cement, conventional mortar, and sand.

Document BR 10 2013 021313-6, like the previous one, proposes to solve the problem of accumulation of paper cement bags as waste and reveals a method of obtaining pallets from the recycling of Kraft paper from these bags and another packaging. Page 2 of the document reveals the existence of other projects also aimed at the recycling of cement bags, including the development of lining boards by crushing the bags, their cold pressing and subsequent drying of the plates in greenhouses at 100°C.

The purpose of document PI 1104067-0 is to provide panels without metal elements and, to this end, reveals a self-supporting panel with EPS core (expanded polystyrene) and mortar reinforced with plasticizing additives and recycled cellulose fibers, in addition to its manufacturing method. According to the document, recycled cellulose fibers can be, among others, Kraft paper bags. According to the information on page 6 of that document, the mortar is prepared by adding, in a proper mixer, the cement, fine sand in varying proportion (according to the desired strength in relation to the weight between half and three parts of sand for each part of cement), recycled and unpaved cellulose fibers (in the proportion of one to fifteen percent by mass) and water in varying proportions according to the moisture content of the sand, having as an ideal pattern a viscous, adherent and homogeneous mortar.

Although the present invention also makes reference to the reuse of mortar and/or cement sacks, it differs from the above documents in that it presents a method of reusing Kraft paper as a cellulose flake in binding compounds, besides describing an innovative manufacturing method of such a flake, which does not require the addition of water.

The present invention has as main relevant contributions to the prior art:
(i) maintaining the traditional method of construction, without the need for further adjustments that would not be of interest due to the cost involved;
(ii) maintaining the supply of bagged material; and
(iii) the possibility of reusing packaging waste, which sets it apart from other companies operating in this segment, which recommend the incineration of this waste.
(iv) reduction of cracks when applied to mortar, which brings mechanical benefits such as increased bond strength.

### Summary of the Invention

In a first aspect, the present invention provides a cellulose flake which confers improved mechanical properties on any product obtained from its use, such as, but not limited to, mortar and concrete.

An object of the present invention is to provide a cellulose flake having an average diameter of less than 5,000 µm, preferably 3,500 µm, comprising cellulose fibers. In particular, the cellulose fibers are obtained from paper, preferably Kraft paper.

In the best embodiment, the cellulose flakes are obtained from recycled Kraft paper, in particular, the Kraft paper used in sacks of construction products such as cement or mortar bags.

An additional object of the present invention is to provide a manufacturing method of cellulose flakes comprising the steps of:
(a) grinding the starting material; and
(b) selection of particles having a diameter of less than 5,000 µm.

According to the invention, grinding of the starting material takes place in a wedge-shaped stepped sequential knife system.

In the best embodiment, particle selection is by means of screens or sieves with suitable openings to obtain the desired size. In particular, the screen used is a 5 mm screen.

In another embodiment, the present invention provides a binding compound comprising the cellulose flake.

An object of the present invention is to provide a binding compound comprising the cellulose flakes in a concentration ranging from 0.1% to 2.0% by weight of the compound.

In the best embodiment, the binding compound comprises:
(a) 0.1% to 2.0% by weight of a cellulose flake;
(b) a cement and/or another binder; and
(c) a filler and/or mineral fillers.

These and other objects of the present invention will be detailed in the following figures and description.

### Brief Description of the Figures

Figure 1 shows a photo of a knife mill used for grinding the starting material according to the present invention. The wedge-shaped stepped sequential knife system, which is responsible for perfectly grinding, might be observed.
Figure 2 shows a photo obtained by electron microscopy of the recycled paper process after the knife grinding process and selection of flakes from a 5 mm screen.
Figure 3 shows a photo of the assembly and instrumentation of the assays of (a) uniaxial compression, (b) bending at four points and (c) pullout.
Figure 4 shows a photo of the experimental arrangement of the restriction shrinkage assay according to the ASTM (American Society for Testing and Materials) C1581 standard.
Figure 5 shows a photo of mortars applied to the wall of the Fluency and Shrinkage laboratory (PUC-Rio).
Figure 6 shows a photographic comparison of applications:
   (a) a coating mortar (with HPMC (hydroxypropyl methylcellulose) additive) without the addition of cellulose flakes; and
   (b) a mortar with 0.3% by weight of cellulose flake according to the present invention and without the inclusion of HPMC additive.
Figure 7 shows the shrinkage curves according to ASTM C1581 standard.
Figure 8 shows photos of crack formation in the shrinkage assay, zoomed in to one of the cracks in each sample according to ASTM C1581 standard:
   (a) reference sample without HPMC and without cellulose flakes;
   (b) HPMC reference sample;
   (c) sample with the addition of 0.3% by weight of cellulose flakes; and
   (d) sample with the addition of 0.6% by weight of the cellulose flake.
Figure 9 shows photos of the Fluminense Football Club training center, where mortar with addition of 0.3% cellulose flake was used as internal and external coating: (a and b) photos of the sector 4 facade - during and after construction, (c) photo of gym - during and after construction, and (d) internal photo showing the perfect finishing of the mortar.

### Detailed Description of the Invention

The examples shown here are intended merely to illustrate some of the numerous embodiments of the present invention and should not be construed as limiting the scope of the present invention, but merely to exemplify a large number of possible embodiments.

Minor modifications in quantities or parameters that achieve the results proposed by the present invention should be understood to be within the scope of the invention. Cellulose Flakes

An object of the method according to the present invention is to provide a cellulose flake having an average diameter of less than 5,000 µm, preferably 3,500 µm, comprising cellulose fibers. In particular, the cellulose fibers are obtained from Kraft paper.

The cellulose flakes are obtained from Kraft paper used in sacks of construction products such as cement or mortar bags.

### Manufacturing Method of Cellulose Flake

The manufacturing method of cellulose flakes of the present invention comprises the steps of:
(a) grinding the starting material; and
(b) selection of particles having a diameter of less than 5,000 µm.

The grinding step is intended to decrease the particle size of the starting material, thereby facilitating its incorporation into the binding compound. Grinding of the material takes place in a wedge-shaped stepped sequential knife system.

The grinding starting material is a material containing cellulosic fibers, such as paper. According to the invention, Kraft paper is obtained from already used cement and/or mortar bags, thus contributing to the use of construction waste and an environmentally friendly logistics operation.

Particle selection is by means of screens or sieves with suitable openings to obtain the desired size. In particular, the screen used is a 5 mm screen.

### Binding Compound

The present invention further provides a binding compound comprising:
(a) 0.1% to 2.0% by weight of a cellulose flake obtained by the method explained above;
(b) a cement and/or another binder; and
(c) a filler and/or mineral fillers.

The compound according to the present invention might be in the form of grain, being referred to as a dry compound, or might be in the form of a dispersion, in which its consistency is pasty, as in ready-to-use mortars.

Non-limiting examples of types of cement useful in accordance with the present invention include mineral types of cement and synthetic types of cement. Examples of mineral types of cement include, without limitation, Portland cement, high alumina cement, sulfoaluminate cement, bellicose cement, pozzolanic cement, which may be used individually or in combination. Examples of synthetic types of cement include, without limitation, acrylic and/or vinyl polymers or copolymers, styrene and butadiene copolymers, styrene and acrylic acid copolymers, vinyl and ethylene acetate copolymers, vinyl acetate and vinyl versatate copolymers, and derivatives thereof. Other binders that may be used in the present invention include, without limitation, geopolymers and (glazed) slag.

Non-limiting examples of fillers used in the compound of the present invention include, without limitation, sands and/or fillers of limestone and/or siliceous origin, gravel, boulder, natural sands, industrial sands, and clay sands.

The binding compound may further contain other cement adjuvant compositions, filler and cellulose flakes. Such adjuvants are intended to impart additional properties to the compound without compromising mechanical properties and to have the same improved proprieties with the inclusion of the cellulose flake described herein.

Non-limiting examples of adjuvant compositions include pigments, waterproofing agents, thickeners, preservatives, viscosity modifiers, corrosion inhibitors, and flame retardants.

### Examples

The following examples are intended to report the results of mechanical (compression, bending on prismatic specimens, tensile bonding, and durability) and shrinkage assays performed on reference mortar and binding compounds with the cellulose flake of the present invention (at concentrations of 0.3% and 0.6% by weight) obtained by passing through 5 mm screens.

### Production of Cellulose Flakes

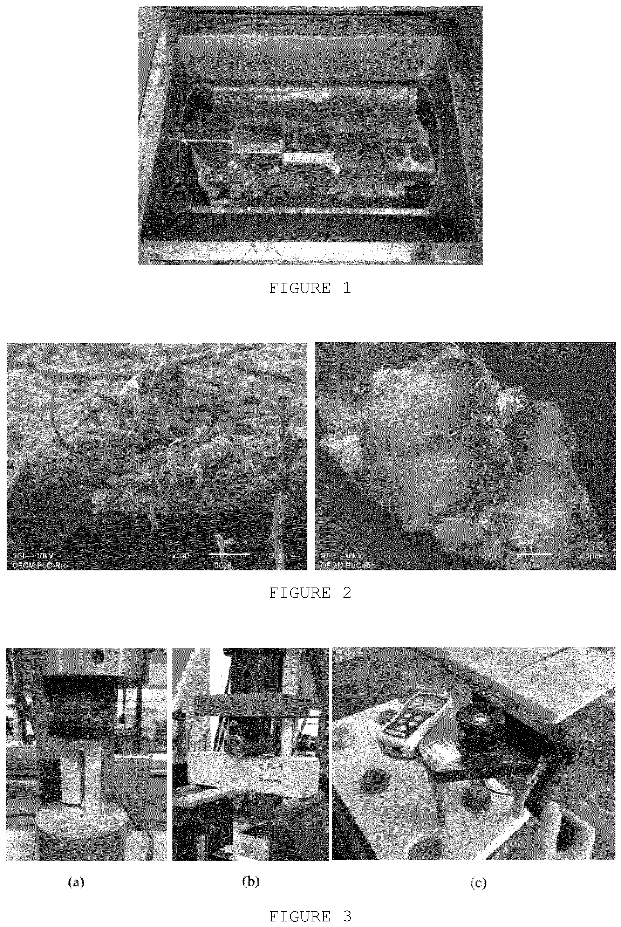

The mortar bags (starting material) were crushed in a knife mill according to Figure 1. Then the crushed material was passed through 2 mm, 5 mm and 10 mm screens and embedded in concentrations of 0.3% and 0.6% by weight in the formulations studied.

Figure 2 shows a micrograph of the cellulose flakes obtained after the grinding process with 5 mm screens, containing cellulosic fibers with approximately 100 µm thickness and 3,500 µm equivalent diameter.

### Preliminary assays to choosing cellulose flake size: Compression and bending assays

The mortar used in the assays of the present invention was produced in a TNZ 1500 TURBO MIXER planetary type mixer, following the dosage is shown in Table 1. The Riomix outer coat (multiuse) base coating with the addition of (hydroxypropyl methylcellulose) meilose GMC 1150 with an average particle size of less than 149 µm. Such an additive also is known as HPMC, is a cellulose-derived polymer with high wetting capacity and high hydration rate. In concrete or mortar, its function is to improve dough consistency and increase water retention.

**Table 1 - Material consumption for the production of mortar**

| Materials | Reference | | |
|---|---|---|---|
| | 0 | A | B |
| Mortar* | 1.5 Kg | 1.5 Kg | 1.5 Kg |
| Water | 285 mL | 285 mL | 285 mL |
| Cellulose flakes | 0 | 4.5 g (0.3%) | 9.0 g (0.6%) |
| Meilose GMC 1150* | 0.01 mass% | 0.01 mass% | 0.01 mass% |

| | | | |
|---|---|---|---|
| * 12% Portland CPII32 E cement; 13.3% limestone filler; 74.09% to 74.7% industrial sand. | | | |

Three essays of uniaxial compression and three-point flexion at 28 days of each formulation were performed. All tests were performed on MTS universal controlled testing system with a load capacity of 500 kN. Compression assays were performed by force control at a rate of 0.3 MPa/s on 50 x 100 mm cylindrical specimens. For comparison, compression assays were also performed on 40 mm x 40 mm section prisms according to NBR 13279 [2]. Displacement was measured by extensometers glued to the central region of the specimen (see Figure 3a). Deformations and applied loading were recorded by an HBM data acquisition system.

Table 2 presents the compression results performed on the HPMC additive traces and inclusions of the cellulose flakes in different lengths and percentages. For the compression assays performed on 50 mm x 100 mm cylinders, formulations with cellulose flake inclusion showed a reduction in compressive strength.

**Table 2 - Mean and standard deviation of uniaxial compression results performed on 50 mm x cylinders, at day 28. Mixtures with HPMC additive**

| Fiber length (mm) | Mixture | Maximum load (kN) | Maximum stress (MPa) |
|---|---|---|---|
| Reference | 0 | 15.73 (1.5) | 8.03 (0.76) |
| 2 | A | 14.28 (2.31) | 7.29 (1.18) |
| | B | 12.79 (0.17) | 6.53 (0.08) |
| 5 | A | 8.00 (0,27) | 4.08 (0.14) |
| | B | 9.15 (1.04) | 4.66 (0.53) |
| 10 | A | 6.84 (0.17) | 3.49 (0.086) |
| | B | 9.97 (0.58) | 5.08 (0.29) |

### Shrinkage Assays

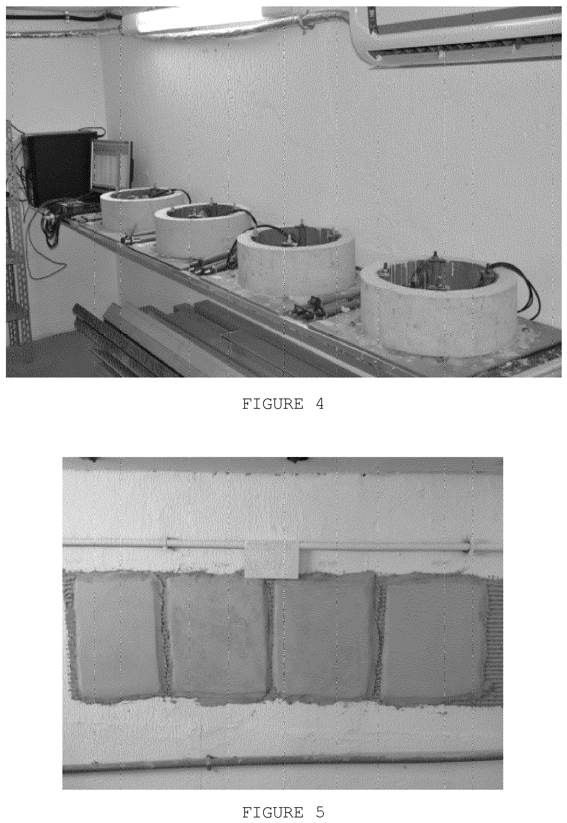

The shrinkage assay using steel ring restriction was conducted according to ASTM C1581 [3], in order to evaluate the cracking potential of mortars with and without cellulose flake. The assay was performed in an environment with controlled temperature and humidity (T = 21±2°C, H = 50±5%) and the samples were monitored over a period of 104 days. The apparatus used in the assay comprised a set of steel components comprising a square base, an inner ring (13 mm thickness, 330 mm outer diameter and 155 mm height) and an outer ring (9 mm thickness, 405 mm inner diameter and 155 mm height), this set being coupled to a HBM data acquisition system (Figure 4). The inner ring acted as a passive constraint to the surrounding mixture.

As the mixing shrunk, it applied a uniform tension on the steel (inner ring), generating deformations therein. Simultaneously to this process, tensile stresses were induced in the sample due to the presence of the constraint (inner ring) . When these stresses exceed the tensile strength of the material, cracking occurred and the deformation measured in the steel dropped. Extensometers were glued to the inner face of the inner ring along the circumference at half height and equidistantly. These extensometers were used to monitor deformations in the inner ring and were connected to a data acquisition system. After the assay, the crack opening was determined with the aid of an optical microscope.

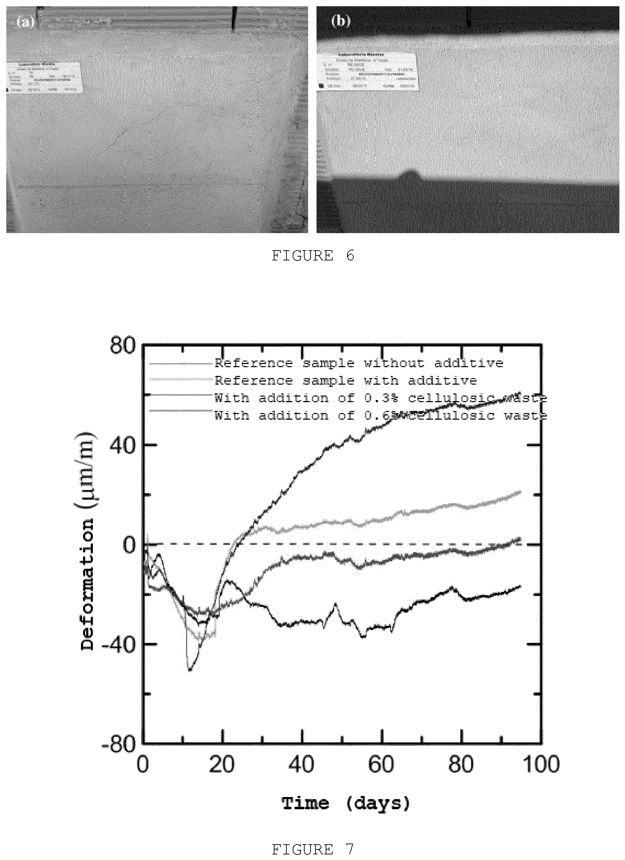

As shown in the curves of Figure 7, as mixtures shrink, as shown by the drop in the deformation value of the graph, they exert uniform compressive stress on the ring, leading to the development of deformations therein. Simultaneously to the shrinkage tendency of the mixtures, tensile stresses were induced in the material by the presence of a passive constraint. When these tensile stresses exceeded the tensile strength of the material, a crack formed, which results in the deformation of the steel ring, evidenced by the shift in the curves of Figure 7 where the deformation value then becomes increasing.

The reference sample without additive (blue line) shows a larger shrinkage of the mortar, evidenced by the smaller deformation value around day 10, shown in Figure 7, followed by a sharp and continuous growth of this value until the end of the experiment, reaching the highest deformation values. This sharp growth is the formation of cracks in the sample, and the high deformation value means a large crack. In this case, the crack has an average length of 0.70 mm.

The sample containing only the additive (green line) shows a profile similar to the sample without additive. It was observed that the additive not only changes the time in which the crack occurs, extending from 10 days to almost 20 but also influences the shrinkage of the sample, providing a less negative deformation value when compared to the sample without additive. It was observed that there is crack formation by a sharp change of the deformation value, and the additive affects the deformation that the sample undergoes, decreasing the maximum deformation measured, consistent with the observed average crack of 0.58 mm.

The samples with the addition of cellulose flake (red and black lines in Figure 7) showed superior performance in relation to cracking behavior under constrained conditions, not only delaying the cracking formation (point where the deformation value passes increasing), as we can see a longer time to reach the minimum value, as well as limiting their respective openings, as can be seen from the maximum deformation value reached after 100 days. The curves of the samples with the cellulose flakes are much smoother without sharp changes.

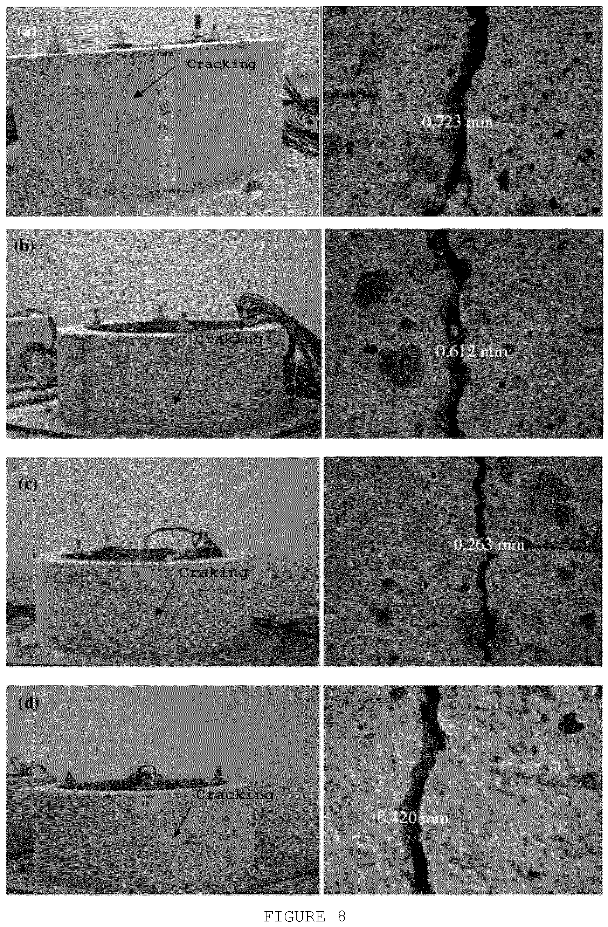

The sample with the addition of 0.3% cellulose flakes (red line) showed the best average performance, with crack formation only after 16 days and an average crack opening of 0.25 mm (see Figure 8). The average crack openings were determined as the average of 5 cracks in different positions of the specimen, as shown in Figure 8 (a). The sample with the addition of 0.6% cellulose flakes (black line) shows very late crack formation. Only after 50 days that there is crack formation and the deformation values become increasing. Additionally, this sample presented the lowest final deformation value, which, in practice, means that the cracks generated are very small.

Table 3 shows the values of all the calculated crack openings.

**Table 3 - Crack openings determined at 5 different positions according to Figure 8(a)**

| Position | Crack opening (mm) | | | |
|---|---|---|---|---|
| | Reference (without HPMC and no flakes) | Reference (with HPMC and no flakes) | Without HPMC and 0.3% cellulose flakes | Without HPMC and 0.6% cellulose flakes |
| Top | 0.684 | 0.503 | 0.283 | 0.298 |
| 1 | 0.723 | 0.612 | 0.263 | 0.519 |
| 2 | 0.713 | 0.644 | 0.296 | 0.420 |
| 3 | 0.704 | 0.570 | 0.154 | 0.384 |
| Base | 0.680 | 0.572 | 0.249 | 0.404 |
| Mean | 0.700 | 0.580 | 0.250 | 0.400 |

In addition, it was found that for mixtures with cellulose flakes, cracking did not occur instantaneously but rather slowly. For mixtures without the addition of cellulose flake, the sharp drop of deformation of the steel ring occurred after 12 days of testing. This sharp drop is related to the crack opening at the full height of the specimen. Furthermore, the average crack opening was also much higher for mortars without the addition of cellulose flakes, always remaining above 0.5 mm (see Figure 8).

### Case Study

The mortar with the addition of 0.3% cellulose flake resulting from the study of the present invention was used as an internal and external coating in construction of the Fluminense Football Club Training Center (CT Pedro Antonio). The CT, built-in Barra da Tijuca, Rio de Janeiro (Av. Ayrton Senna, s/n) in August 2016 on the land of 39,3 m² was divided as follows:
(a) sector 1: support area (laundry, garage, storage for deposit materials);
(b) sectors 2 and 3: daily football routine (changing rooms, medical department, physiotherapy, strength training, swimming pools, and athletes' recovery); and
(c) sector 4: a six-story tower that will house the lodging area (hotel, administrative structure, press room, and dining hall).

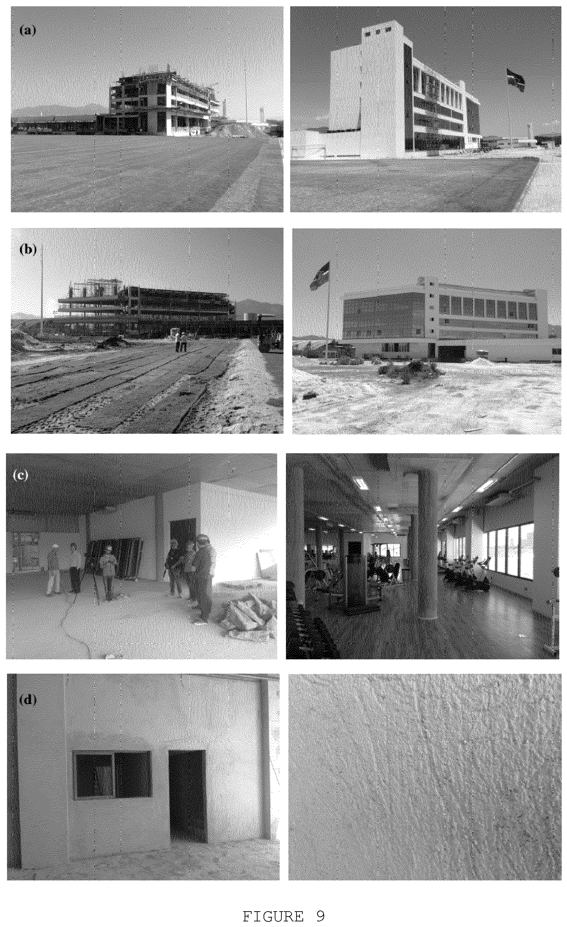

Figure 9 shows photos of the construction in different stages and sectors. Figure 9(a) and Figure 9(b) show a photo of sector 4 in which the binding compound of the present invention was used as an external coating. During site visits, no cracking or other unusual behavior was noted. The finish is the same as the reference mortar, making it almost impossible to notice any difference by adding the cellulose flake.

Figure 9(c) and Figure 9(d) show parts of the gym where the binding compound with the addition of 0.3% cellulose flake was used as an internal coating. It is noticed (mainly in photo 9(d)) a perfect finish and no crack formation.

### REFERENCES

[1] Santos, L. R. e Carvalho, E. F.; "AVALIAÇÃO DE ARGAMASSAS COM FIBRAS DE PAPEL KRAFT PROVENIENTES DE EMBALAGENS DE CIMENTO"; Final graduation work, Federal University of Goiás, 2011.
[2] Associa 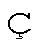 ão Brasileira de Normas Técnicas. NBR 13279: Argamassa para assentamento e revestimento de paredes e tetos - Determina 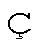 ão da resistência à tra 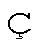 ão na flexão e à compressão. Rio de Janeiro, ABNT, 2005.
[3] ASTM C 1581 Standard Test Method for Determining Age at Cracking and Induced Tensile Stress Characteristics of Mortar and Concrete under Restrained Shrinkage.

## Claims

1. Method for manufacturing cellulose flakes, the method comprising:
(a) grinding kraft paper packing used in sacks of construction by processing said starting material in a knife mill, wherein said grinding takes place in a wedge-shaped stepped sequential knife system; and
(b) selecting of particles, by sieving the material resulting from the first step (a) in sieves with up to 5 mm screen,
wherein no water is required to perform said method.

2. Method according to claim 1, **characterized in that** the particle selection is by sieving on sieves with 4.76 mm, 4.00 mm, 3.36 mm or 2.00 mm screen.

3. Binding composition, **characterized in that** it comprises:
(a) 0.1% to 2.0% by weight of a cellulose flake obtained according to the claims 1 or 2;
(b) a cement and/or other binder; and
(c) a filler.

4. Binding composition, according to claim 3, **characterized in that** the cement and/or other binder is selected from the group comprising Portland cement, high alumina cement, sulfoaluminate cement, bellicose cement, pozzolanic cement, acrylic and/or vinyl polymers or copolymers, styrene and butadiene copolymers, styrene and acrylic acid copolymers, vinyl and ethylene acetate copolymers, vinyl acetate and vinyl versatate copolymers, geopolymers and glazed slag and combinations thereof.

5. Binding composition, according to claim 3, **characterized in that** the filler is selected from the group comprising sands and/or fillers of limestone and/or siliceous origin, gravel, boulder, natural sands, industrial sands, clay sands, and combinations thereof.

6. Binding composition, according to claim 5, **characterized in that** it comprises 0.3% to 0.6% by weight of cellulose flakes.

7. Binding composition, according to claim 5, **characterized in that** it is in the form of grain.

8. Binding composition, according to claim 3, **characterized in that** it further comprises at least one adjuvant composition selected from the group comprising pigments, waterproofing agents, thickeners, preservatives, viscosity modifiers, corrosion inhibitors, flame retardants and combinations thereof.

## Patentansprüche

1. Verfahren zum Herstellen von Zelluloseflocken, das Verfahren umfassend:
(a) Zerkleinern von Kraftpapierverpackungen, die in Bausäcken verwendet werden, durch Verarbeiten des Ausgangsmaterials in einer Messermühle, wobei das Zerkleinern in einem keilförmig abgestuften, sequenziellen Messersystem erfolgt; und
(b) Auswählen von Partikeln durch Sieben des aus dem ersten Schritt (a) resultierenden Materials in Sieben mit bis zu 5 mm Siebdurchmesser,
wobei zur Durchführung des Verfahrens kein Wasser erforderlich ist.

2. Verfahren nach Anspruch 1, **dadurch gekennzeichnet, dass** die Partikelauswahl durch Sieben auf Sieben mit 4,76 mm, 4,00 mm, 3,36 mm oder 2,00 mm Sieb erfolgt.

3. Bindungszusammensetzung, **dadurch gekennzeichnet, dass** sie Folgendes umfasst:
(a) 0,1 bis 2,0 Gew.-% einer nach den Ansprüchen 1 oder 2 erhaltenen Celluloseflocke;
(b) einen Zement und/oder ein anderes Bindemittel; und
(c) einen Füllstoff.

4. Bindungszusammensetzung nach Anspruch 3, **dadurch gekennzeichnet, dass** der Zement und/oder ein anderes Bindemittel aus der Gruppe ausgewählt ist, die Portlandzement, Hochtonerdezement, Sulfoaluminatzement, Bellicosezement, Puzzolanzement, Acryl- und/oder Vinylpolymere oder -copolymere, Styrol-Butadien-Copolymere, Styrol-Acrylsäure-Copolymere, Vinyl-Ethylenacetat-Copolymere, Vinylacetat-Vinylversatat-Copolymere, Geopolymere und glasierte Schlacke sowie Kombinationen davon umfasst.

5. Bindungszusammensetzung nach Anspruch 3, **dadurch gekennzeichnet, dass** der Füllstoff aus der Gruppe ausgewählt ist, die Sand und/oder Füllstoffe kalkhaltigen und/oder kieselhaltigen Ursprungs, Kies, Geröll, Natursand, Industriesand, Tonsand und Kombinationen davon umfasst.

6. Bindungszusammensetzung nach Anspruch 5, **dadurch gekennzeichnet, dass** sie 0,3 bis 0,6 Gew.-% Zelluloseflocken umfasst.

7. Bindungszusammensetzung nach Anspruch 5, **dadurch gekennzeichnet, dass** sie in Form von Körnern vorliegt.

8. Bindungszusammensetzung nach Anspruch 3, **dadurch gekennzeichnet, dass** sie ferner mindestens eine Hilfsstoffzusammensetzung umfasst, die aus der Gruppe ausgewählt ist, die Pigmente, wasserabweisende Mittel, Verdickungsmittel, Konservierungsmittel, Viskositätsmodifikatoren, Korrosionsinhibitoren, Flammschutzmittel und Kombinationen davon umfasst.

## Revendications

1. Procédé permettant de fabriquer des flocons de cellulose, le procédé comprenant :
(a) le broyage d'emballage en papier kraft utilisé dans les sacs de matériaux de construction par traitement dudit matériau de départ dans un broyeur à couteaux, dans lequel ledit broyage s'effectue dans un système de couteaux séquentiels étagé en forme de coin ; et
(b) la sélection de particules, en tamisant le matériau issu de la première étape (a) dans des tamis à mailles de 5 mm maximum,
dans lequel aucune eau n'est nécessaire pour mettre en œuvre ledit procédé.

2. Procédé selon la revendication 1, **caractérisé en ce que** la sélection de particules s'effectue par tamisage sur des tamis à mailles de 4,76 mm, 4,00 mm, 3,36 mm ou 2,00 mm.

3. Composition liante, **caractérisée en ce qu'**elle comprend :
(a) de 0,1 % à 2,0 % en poids de flocons de cellulose obtenus selon les revendications 1 ou 2 ;
(b) du ciment et/ou un autre liant ; et
(c) une charge.

4. Composition liante, selon la revendication 3, **caractérisée en ce que** le ciment et/ou autre liant est choisi dans le groupe constitué de ciment Portland, de ciment à haute teneur en alumine, de ciment sulfoaluminate, de ciment agressif, de ciment pouzzolanique, de polymères ou copolymères d'acrylique et/ou de vinyle, de copolymères de styrène et de butadiène, de copolymères de styrène et d'acide acrylique, de copolymères de vinyle et d'acétate d'éthylène, de copolymères d'acétate de vinyle et de versatate de vinyle, de géopolymères et de scories vitrifiées et des combinaisons de ceux-ci.

5. Composition liante, selon la revendication 3, **caractérisée en ce que** la charge est choisie dans le groupe constitué de sables et/ou charges d'origine calcaire et/ou siliceuse, graviers, blocs, sables naturels, sables industriels, sables argileux et des combinaisons de ceux-ci.

6. Composition liante, selon la revendication 5, **caractérisée en ce qu'**elle comprend 0,3 % à 0,6 % en poids de flocons de cellulose.

7. Composition liante, selon la revendication 5, **caractérisée en ce qu'**elle se présente sous forme de granulés.

8. Composition liante, selon la revendication 3, **caractérisée en ce qu'**elle comprend en outre au moins une composition adjuvante choisie dans le groupe constitué de pigments, d'agents imperméabilisants, d'épaississants, de conservateurs, de modificateurs de viscosité, d'inhibiteurs de corrosion, de retardateurs de flamme et des combinaisons de ceux-ci.
